# EUROPÄISCHE PATENTSCHRIFT

(11) **EP 2 289 201 B1**
(45) Veröffentlichungstag und Bekanntmachung des Hinweises auf die Patenterteilung: **26.08.2015**
(21) Anmeldenummer: 09761529.8
(22) Anmeldetag: 25.03.2009
(51) Int. Cl.: H04L 7/04, H04L 5/14

(54) **VORRICHTUNG UND VERFAHREN ZUR SERIELLEN DATENÜBERTRAGUNG ZWISCHEN EINEM POSITIONSMESSGERÄT UND EINER STEUERUNGSEINHEIT**
DEVICE AND METHOD FOR THE SERIAL DATA TRANSMISSION BETWEEN A POSITION MEASURING DEVICE AND A CONTROL UNIT
DISPOSITIF ET PROCÉDÉ DE TRANSMISSION DE DONNÉES EN SÉRIE ENTRE UN APPAREIL DE MESURE DE POSITION ET UNE UNITÉ DE COMMANDE

(30) Priorität: 11.06.2008 DE 102008027902
(43) Veröffentlichungstag der Anmeldung: 02.03.2011
(73) Patentinhaber: Dr. Johannes Heidenhain GmbH, 83301 Traunreut (DE)
(72) Erfinder: BEAURY, Bernhard, 83253 Rimsting (DE); HELLMICH, Heik H., 83370 Seeon (DE); STRASSER, Erich, 83308 Trostberg (DE)
(86) Internationale Anmeldenummer: PCT/EP2009/053494
(87) Internationale Veröffentlichungsnummer: WO 2009/149966

(56) Entgegenhaltungen:
- EP-A- 1 369 754
- EP-B2- 0 660 209
- WO-A-00/64099
- DE-A1-102006 018 574
- GB-A- 2 346 441
- US-A- 3 309 463
- US-A1- 2002 196 884
- US-A1- 2003 223 486
- US-A1- 2008 117 086
- JEAN PÜTZ: "Digitaltechnik: Eine Einführung für Anfänger" 1978, VDI VERLAG , DÜSSELDORF , XP002535375 Seite 282, rechte Spalte, letzter Absatz - Seite 285, rechte Spalte, letzter Absatz; Abbildungen 11/12,11/15
- Compaq: "Universal Serial Bus Specification; Revision 2", , 27 April 2000 (2000-04-27), page i,17,69-76,151-153,157,195, XP55053307, Retrieved from the Internet: URL:www.usb.org [retrieved on 2013-02-13]
- GRILL W: "SYNCHRONIZING CONTROLLER DETECTS BAUD RATE", EDN ELECTRICAL DESIGN NEWS.(TEXAS INSTRUMENT), REED BUSINESS INFORMATION, HIGHLANDS RANCH, CO, US, no. EUROPE, 2 March 1998 (1998-03-02), page 99, XP000779115, ISSN: 0012-7515
- GABRIEL C ET AL: "Integrating sensor devices in a LIN bus network", ELECTRONICS TECHNOLOGY: INTEGRATED MANAGEMENT OF ELECTRONIC MATERIALS PRODUCTION, 2003. 26TH INTERNATIONAL SPRING SEMINAR ON MAY 8-11, 2003, PISCATAWAY, NJ, USA,IEEE, 8 May 2003 (2003-05-08), pages 150-153, XP010679244, DOI: 10.1109/ISSE.2003.1260504 ISBN: 978-0-7803-8002-8

## Beschreibung

Die Erfindung betrifft eine Vorrichtung zur seriellen Datenübertragung nach Anspruch 1, sowie ein Verfahren zur seriellen Datenübertragung nach Anspruch 9. Mittels einer derartigen Vorrichtung, bzw. eines erfindungsgemäßen Verfahrens, ist eine bidirektionale Datenübertragung über eine einzelne einkanalige Datenleitung möglich.

In der Automatisierungstechnik werden vermehrt Positionsmessgeräte eingesetzt, die einen absoluten Positionswert zur Verfügung stellen. Dadurch entfallen bestimmte Nachteile sogenannter inkrementaler Positionsmessgeräte, wie z.B. die Notwendigkeit, nach dem Einschalten eine Referenzfahrt vornehmen zu müssen, um eine Referenzposition zu finden, die als Bezugspunkt für die weitere Positionsmessung durch Zählen von Teilungsstrichen dient.

Für die Übertragung der absoluten Positionswerte kommen hauptsächlich serielle Datenschnittstellen zum Einsatz, da diese mit nur wenigen Datenübertragungsleitungen auskommen und trotzdem hohe Datenübertragungsraten aufweisen. Besonders vorteilhaft sind hier die sogenannten synchron-seriellen Schnittstellen, die eine uni- oder bidirektionale Datenleitung und eine Taktleitung aufweisen. Die Übertragung von Datenpaketen über die Datenleitung erfolgt synchron zu einem Taktsignal auf der Taktleitung.

Die EP0171579A1 beschreibt beispielsweise eine synchron-serielle Datenschnittstelle mit einer unidirektionalen Daten- und einer unidirektionalen Taktleitung. Das Auslesen von Positionswerten von einem Positionsmessgerät erfolgt hier synchron zu einem Taktsignal auf der Taktleitung. Diese Schnittstelle ist in Fachkreisen unter der Bezeichnung "SSI" bekannt.

Die EP0660209B2 beschreibt dagegen eine synchron-serielle Schnittstelle mit einer bidirektionalen Datenleitung und einer unidirektionalen Taktleitung. Hier ist eine Übertragung von Daten in beide Richtungen - von der Folgeelektronik zum Positionsmessgerät und vom Positionsmessgerät zur Folgeelektronik - möglich. Die Datenübertragung erfolgt auch hier synchron zu einem Taktsignal auf der Taktleitung. Dieses Prinzip bildet die Grundlage einer unter der Bezeichnung "EnDat" bekannten Schnittstelle der Anmelderin.

Bei beiden genannten Schnittstellen wird die Datenübertragungsrate durch die Frequenz des Taktsignals auf der Taktleitung bestimmt, d.h. eine Verringerung der Frequenz des Taktsignals verringert die Datenübertragungsrate und umgekehrt. Dadurch ist eine Anpassung an äußere Gegebenheiten, wie beispielsweise die Kabellänge zwischen Folgeelektronik und Positionsmessgerät, möglich.

Ein wichtiger Kostenfaktor beim Anschluss von Positionsmessgeräten an eine Folgeelektronik, beispielsweise eine Werkzeugmaschinensteuerung, basiert auf der Anzahl der benötigten Verbindungsleitungen, da sie maßgeblich den Preis der eingesetzten hochwertigen Datenkabel bestimmen. Außerdem wird dadurch auch Anzahl der benötigten Steckerpins bei den Steckverbindern festgelegt.

Es ist daher Aufgabe der Erfindung, eine Vorrichtung zur seriellen Datenübertragung bereitzustellen, bei der die Anzahl der für die Datenübertragung notwendigen Leitungen reduziert werden kann und die weiterhin flexible Datenübertragungsraten erlaubt.

Diese Aufgabe wird gelöst durch eine Vorrichtung nach Anspruch 1. Vorteilhafte Details der Vorrichtung ergeben sich aus den von Anspruch 1 abhängigen Ansprüchen.

Es wird nun eine Vorrichtung zur seriellen Datenübertragung zwischen einem Positionsmessgerät und einer Steuerungseinheit vorgeschlagen, bestehend aus einer steuerungsseitigen Schnittstelleneinheit und einer messgeräteseitigen Schnittstelleneinheit, die zur Übertragung serieller Datenpakete mittels eines bidirektionalen Datenkanals miteinander verbunden sind. Die steuerungsseitige Schnittstelleneinheit umfasst eine steuerungsseitige Sendeeinheit zum Senden von seriellen Datenpaketen über den Datenkanal zu einer in der messgeräteseitigen Schnittstelleneinheit angeordneten messgeräteseitigen Empfängereinheit. Die messgeräteseitige Schnittstelleneinheit umfasst eine messgeräteseitige Sendeeinheit zum Senden von seriellen Datenpaketen über den Datenkanal zu einer in der steuerungsseitigen Schnittstelleneinheit angeordneten steuerungsseitigen Empfängereinheit. Von der steuerungsseitigen Sendeeinheit gesendete Datenpakete enthalten einleitend eine Taktsequenz, aus deren zeitlichem Verlauf die Fre- , quenz eines der Übertragung zugrunde liegenden steuerungsseitigen Sendetaktsignals ableitbar ist. Die messgeräteseitige Empfängereinheit umfasst eine messgeräteseitige Takterkennungseinheit, die die Taktsequenz auswertet und zum Einlesen von im Datenpaket enthaltenen steuerungsseitigen Ausgangsdaten ein messgeräteseitiges Empfängertaktsignal generiert, dessen Frequenz weitgehend der des steuerungsseitigen Sendetaktsignals entspricht.

Weiter ist es Aufgabe der Erfindung, ein Verfahren zur seriellen Datenübertragung mittels einer erfindungsgemäßen Vorrichtung anzugeben.

Diese Aufgabe wird gelöst durch ein Verfahren nach Anspruch 9. Vorteilhafte Details des Verfahrens ergeben sich aus den von Anspruch 9 abhängigen Ansprüchen.

Hierzu wird ein Verfahren zur seriellen Datenübertragung zwischen einem Positionsmessgerät und einer Steuerungseinheit mittels einer Vorrichtung vorgeschlagen, bestehend aus einer steuerungsseitigen Schnittstelleneinheit und einer messgeräteseitigen Schnittstelleneinheit, die zur Übertragung serieller Datenpakete mittels eines bidirektionalen Datenkanals miteinander verbunden sind. Die steuerungsseitige Schnittstelleneinheit umfasst eine steuerungsseitige Sendeeinheit zum Senden von seriellen Datenpaketen über den Datenkanal zu einer in der messgeräteseitigen Schnittstelleneinheit angeordneten messgeräteseitigen Empfängereinheit. Die messgeräteseitige Schnittstelleneinheit umfasst eine messgeräteseitige Sendeeinheit zum Senden von seriellen Datenpaketen über den Datenkanal zu einer in der steuerungsseitigen Schnittstelleneinheit angeordneten steuerungsseitigen Empfängereinheit. Das erfindungsgemäße Verfahren weist folgende Schritte auf:
- Übertragung von steuerungsseitigen Ausgangsdaten mittels eines Datenpakets von der steuerungsseitigen Sendeeinheit über den Datenkanal zur messgeräteseitigen Empfängereinheit im Zeittakt eines steuerungsseitigen Sendetaktsignals, wobei das Datenpaket einleitend eine Taktsequenz enthält, aus deren zeitlichem Verlauf die Frequenz des steuerungsseitigen Sendetaktsignals ableitbar ist,
- Auswertung der Taktsequenz und Erzeugung eines messgeräteseitigen Empfängertaktsignals, dessen Frequenz weitgehend der des steuerungsseitigen Sendetaktsignals entspricht, in einer messgeräteseitigen Takterkennungseinheit, die in der messgeräteseitigen Empfängereinheit angeordnet ist,
- Einlesen von im Datenpaket enthaltenen steuerungsseitigen Ausgangsdaten als messgeräteseitige Eingangsdaten im Zeittakt des messgeräteseitigen Empfängertaktsignals.

Weitere Vorteile sowie Einzelheiten der vorliegenden Erfindung ergeben sich aus der nachfolgenden Beschreibung anhand der Figuren. Dabei zeigt
- Figur 1: ein Blockdiagramm einer erfindungsgemäßen Vorrichtung zur seriellen Datenübertragung,
- Figur 2: ein Blockdiagramm einer weiteren Ausführungsform einer erfindungsgemäßen Vorrichtung,
- Figur 3: zeigt ein schematisches Signalablaufdiagramm für die in Figur 2 dargestellte erfindungsgemäße Vorrichtung,
- Figur 4: zeigt ein Signaldiagramm einer Taktsequenz TS und
- Figur 5: zeigt einen Zähler zur Auswertung der Taktsequenz TS.

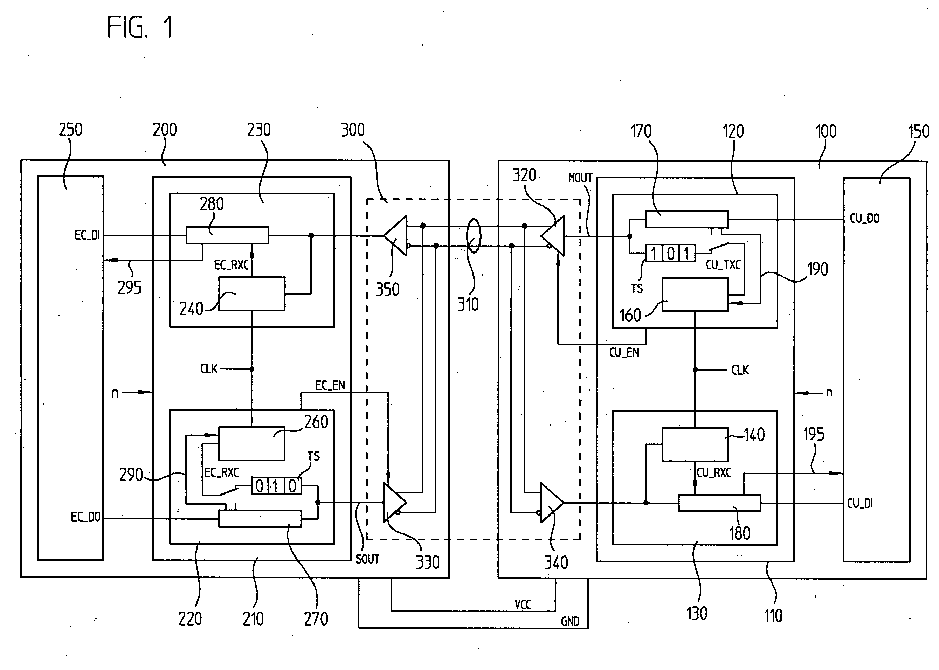

Figur 1 zeigt ein Blockdiagramm einer Vorrichtung zur seriellen Datenübertragung zwischen einer Steuerungseinheit 100 und einem Positionsmessgerät 200. Zum Austausch von Daten sind in der Steuerungseinheit 100 eine steuerungsseitige Schnittstelleneinheit 110 und im Positionsmessgerät 200 eine messgeräteseitige Schnittstelleneinheit 210 angeordnet, die über einen seriellen, bidirektionalen Datenkanal 300 miteinander verbunden sind. Zum Übertragen von Daten von der Steuerungseinheit 100 zum Positionsmessgerät 200 ist in der steuerungsseitigen Schnittstelleneinheit 110 eine steuerungsseitige Sendeeinheit 120 und in der messgeräteseitigen Schnittstelleneinheit 210 eine messgeräteseitige Empfängereinheit 230 angeordnet. Analog dazu erfolgt die Datenübertragung in der Gegenrichtung über eine messgeräteseitige Sendeeinheit 220 und eine steuerungsseitige Empfängereinheit 130.

Die Stromversorgung kann dem Positionsmessgerät 200 über Versorgungsleitungen VCC, GND von der Steuerungseinheit 100 zugeführt werden.

Zur Datenübertragung zwischen dem Positionsmessgerät 200 und der Steuerungseinheit 100 ist ein Datenkanal 300 vorgesehen. Dieser ist einkanalig ausgeführt, d.h. die Übertragung kann im einfachsten Fall über eine einzelne Leitung erfolgen, auf der die logischen Werte der einzelnen Bits der Datenpakete in Form von Spannungspegeln bezogen auf das Bezugspotential GND übertragen werden. Mit Vorteil ist der Datenkanal 300 jedoch differentiell aufgebaut, d.h. die Datenübertragung erfolgt über ein Leitungspaar 310, wobei über die zwei Leitungen die zu übertragenden Signale zueinander invertiert übertragen werden. Hierzu sind steuerungsseitig und messgeräteseitig je ein differentieller Treiberbaustein 320, 330 und ein differentieller Empfängerbaustein 340, 350 angeordnet. Die Ausgänge der Treiberbausteine 320, 330 und die Eingänge der Empfängerbausteine 340, 350 sind entsprechend an das Leitungspaar 310 angeschlossen. Differentielle Datenübertragung ist im Stand der Technik bekannt und wird nicht weiter erläutert. Da die Übertragung von Daten über den Datenkanal 300 in beiden Richtungen über nur ein Leitungspaar 310 erfolgt, darf, um Datenkollisionen zu vermeiden, immer nur einer der Treiberbausteine 320, 330 aktiv geschaltet sein. Die Aktivierung der Treiberbausteine 320, 330 erfolgt über Freigabesignale CU_EN, EC_EN, die von den zugeordneten Sendeeinheiten 120, 220 gesteuert werden. Für die Datenübertragung von der Steuerungseinheit 100 zum Positionsmessgerät 200 ist beispielsweise der steuerungsseitige Treiberbaustein 320 mit dem steuerungsseitigen Freigabesignal CU_EN aktiv und der messgeräteseitige Treiberbaustein 330 über das messgeräteseitige Freigabesignal EC_EN passiv geschaltet. Da bei der hier beschriebenen Konfiguration eine Datenübertragung vom Positionsmessgerät 200 zur Steuerungseinheit 100 stets von der Steuerungseinheit 100 initiiert wird, ist diese Einstellung der Freigabesignale EC_EN, CU_EN als Grundeinstellung besonders vorteilhaft.

Eine Verarbeitungseinheit 150 führt steuerungsseitige Ausgangsdaten CU_DO der steuerungsseitigen Sendeeinheit 120 zu, die Datenpakete bildet und als seriellen Datenstrom über den Datenkanal 300 zum Positionsmessgerät 200 überträgt. Zum Zwischenspeichern der steuerungsseitigen Ausgangsdaten CU_DO ist in der steuerungsseitigen Sendeeinheit 120 ein Ausgangsdatenspeicher 170 vorgesehen. Die Datenübertragungsrate, also die Übertragungsgeschwindigkeit mit der die Datenpakete bitweise übertragen werden, wird dabei von einem steuerungsseitigen Sendetaktsignal CU_TXC bestimmt, das in einem Taktgenerator 160 generiert wird, der ebenfalls in der steuerungsseitigen Schnittstelleneinheit 110 angeordnet ist.

Zum Einlesen eines Datenpakets benötigt die messgeräteseitige Empfängereinheit 230 ein messgeräteseitiges Empfängertaktsignal EC_RXC, das wenigstens für die Dauer der Übertragung des Datenpakets synchron mit dem eintreffenden seriellen Datenstrom verläuft. Um dieses erzeugen zu können, sendet die steuerungsseitige Sendeeinheit 120 am Anfang des Datenpakets eine Taktsequenz TS, beispielsweise die Bitfolge 1-0-1, aus deren zeitlichen Verlauf in einer Takterkennungseinheit 240, die in der messgeräteseitigen Empfängereinheit 230 angeordnet ist, das messgeräteseitige Empfängertaktsignal EC_RXC abgeleitet wird. Das kann beispielsweise durch eine Messung von Flankenabständen der Taktsequenz TS erfolgen.

Nachdem das messgeräteseitige Empfängertaktsignal EC_RXC zur Verfügung steht, können die im Datenstrom enthaltenen Daten extrahiert und als messgeräteseitige Eingangsdaten EC_DI für die weitere Verarbeitung an eine im Positionsmessgerät 200 enthaltene Positionsmesseinheit 250 weitergeleitet werden. Je nach Anbindung der messgeräteseitigen Empfängereinheit 230 an die Positionsmesseinheit 250 können die Eingangsdaten EC_DI vor der Weiterleitung in einem Eingangsdatenspeicher 280 zwischengespeichert werden. Das Vorhandensein von Eingangsdaten EC_DI im Eingangsdatenspeicher 280 wird der Positionsmesseinheit 250 dann beispielsweise über eine Signalleitung 295 des Eingangsdatenspeichers 280 signalisiert. Alternativ kann die Signalisierung auch von der Takterkennungseinheit 240 erfolgen.

Datenpakete, die auf diese Weise von der Steuerungseinheit 100 zum Positionsmessgerät 200 gesendet werden, können beliebige Informationen umfassen:
- Befehle, beispielsweise zur Anforderung von Positionswerten oder Speicherinhalten ("elektronisches Typenschild")
- Adressierungsinformationen zur gezielten Auswahl eines Positionsmessgeräts 200 (notwendig, wenn mehrere Positionsmessgeräte 200 an eine Steuerungseinheit 100 angeschlossen sind)
- Steuerungs- oder Konfigurationsdaten, beispielsweise Kalibrierwerte

Für die Datenübertragung in entgegen gesetzter Richtung, also vom Positionsmessgerät 200 zur Steuerungseinheit 100, führt die Positionsmesseinheit 250 der messgeräteseitigen Sendeeinheit 220 messgeräteseitige Ausgangsdaten EC_DO zu. Auch hier kann zur Zwischenspeicherung ein Ausgangsdatenspeicher 270 vorgesehen sein. Bei den messgeräteseitigen Ausgangsdaten EC_DO kann es sich beispielsweise um per Befehl von der Steuerungseinheit 100 angeforderte Positionsdaten oder Speicherinhalte handeln. Die messgeräteseitige Sendeeinheit 220 bildet wiederum Datenpakete, die sie mit einer Datenübertragungsrate, die von einem messgeräteseitigen Sendetaktsignal EC_TXC bestimmt wird, in Form eines seriellen Datenstroms über den Datenkanal 300 zur steuerungsseitigen Empfängereinheit 130 sendet. Der Beginn der Übertragung, in diesem Fall gleichbedeutend mit dem Start des messgeräteseitigen Sendetaktsignals EC_TXC, kann wiederum über eine Signalleitung 290 vom messgeräteseitigen Ausgangsdatenspeicher 270 initiiert werden.

Die Datenwortbreite der zu übertragenden Daten ist den Schnittstelleneinheiten 110, 210 durch Parameter n vorgegeben, die entweder fest eingestellt oder aber programmierbar ausgeführt sein können. Diese Information wird unter anderem auch zur korrekten Steuerung der Freigabesignale CU_EN, EC_EN benötigt. Weiter stehen den Schnittstelleneinheiten 110, 210 zur Steuerung der internen Abläufe jeweils Arbeitstaktsignale CLK zur Verfügung. Diese können beispielsweise von den Taktgeneratoren 160, 260 zur Erzeugung der Sendetaktsignale CU_TXC, EC_TXC und gegebenenfalls in den Takterkennungseinheiten 140, 240 zur Ermittlung der Empfängertaktsignale CU_RXC, EC_RXC verwendet werden.

Im einfachsten Fall kann es sich bei dem messgeräteseitigen Sendetaktsignal EC_TXC um das messgeräteseitige Empfängertaktsignal EC_RXC handeln. Kann darüber hinaus gewährleistet werden, dass das Senden des Datenstroms in Richtung Steuerungseinheit 100 weitgehend synchron zu dem von der Steuerungseinheit 100 empfangenen Datenstrom verläuft, kann in dieser Datenrichtung gegebenenfalls auf eine Übertragung einer Taktsequenz TS verzichtet werden, da auf der Seite der Steuerungseinheit 100 für den Empfang des Datenstroms das steuerungsseitige Sendetaktsignal CU_TXC als steuerungsseitiges Empfängertaktsignal CU_RXC verwendet werden kann.

Im Hinblick auf eine erhöhte Übertragungssicherheit ist es jedoch besonders vorteilhaft, wenn vom Positionsmessgerät 200 zur Steuerungseinheit 100 übertragene Datenpakete ebenfalls einleitend eine Taktsequenz TS, beispielsweise die Bitfolge 0-1-0, enthalten, aus der in einer steuerungsseitigen Takterkennungseinheit 140, die in der steuerungsseitigen Empfängereinheit 130 angeordnet ist, für den Empfang des eintreffenden Datenstroms das steuerungsseitige Empfängertaktsignal CU_RXC abgeleitet wird. Das messgeräteseitige Sendetaktsignal EC_TXC wird in diesem Fall in einem Taktgenerator 260 erzeugt. Diese Lösung hat den weiteren Vorteil, dass in jeder Datenrichtung verschiedene Datenübertragungsraten verwendet werden können. Mit Hilfe des steuerungsseitigen Empfängertaktsignals CU_RXC extrahiert die steuerungsseitige Empfängereinheit 130 die im eintreffenden seriellen Datenstrom enthaltenen Daten, speichert sie in einem steuerungsseitigen Eingangsdatenspeicher 180 und gibt sie in Form von steuerungsseitigen Eingangsdaten CU_DI an die Verarbeitungseinheit 150 weiter.

Als Eingangsdatenspeicher 180, 280, bzw. den Ausgangsdatenspeicher 170, 270 können sowohl parallel, als auch seriell beschreibbare Speicherbausteine eingesetzt werden. Parallel beschreibbare Speicherbausteine werden auch als Ein- bzw. Ausgangsregister bezeichnet. Seriell beschreibbare Speicherbausteine sind beispielsweise Schieberegister oder spezielle serielle Speicher, insbesondere mit first-in/first-out Architektur.

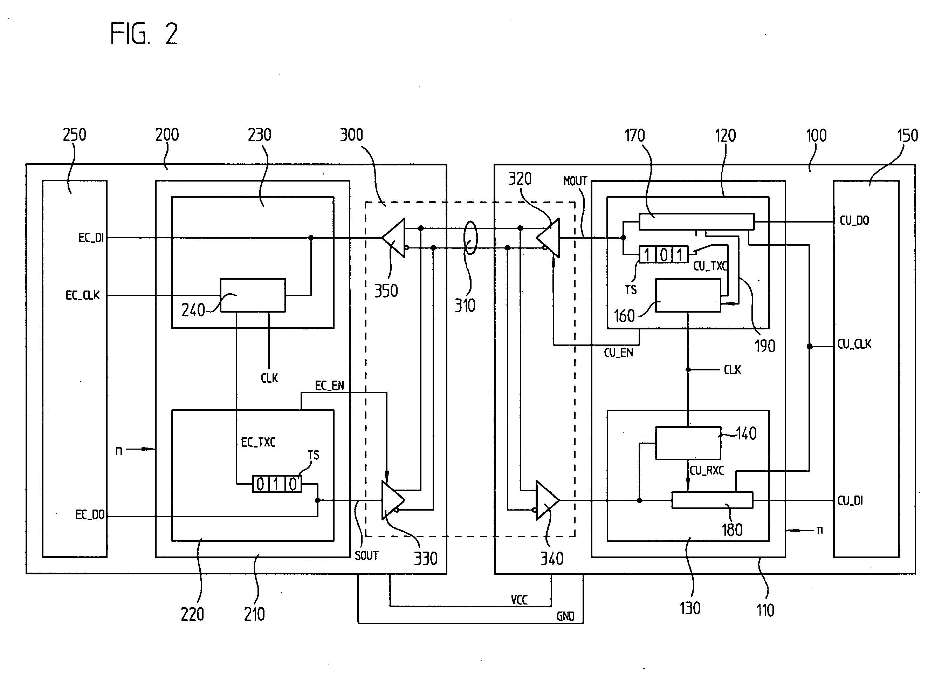

Grundsätzlich ist es möglich, dass bereits die Verarbeitungseinheit 150, bzw. die Positionsmesseinheit 250 eine Taktsequenz TS in die Ausgangsdaten CU_DO, EC_DO einfügt. Bei bereits vorhandenen Verarbeitungseinheiten 150, bzw. Positionsmesseinheiten 250 erfordert dies jedoch eine Modifikation der zur Übertragung der Ausgangsdaten CU_DO, EC_DO genutzten Schnittstelle. Wenn das Einfügen der Taktsequenz TS dagegen in der Sendeeinheit 120, 220 vorgenommen wird, können gegebenenfalls bereits vorhandene Verarbeitungseinheiten 150, sowie Positionsmesseinheiten 250, ohne Modifikationen weiter eingesetzt werden. Das gilt speziell dann, wenn das Zuführen der Ausgangsdaten CU_DO, EC_DO, wie unten in Figur 2 gezeigt, über synchron-serielle Schnittstellen erfolgt.

Figur 2 zeigt ein Blockdiagramm einer bevorzugten Ausführungsform einer erfindungsgemäßen Vorrichtung. Die Anbindung der Verarbeitungseinheit 150 an die steuerungsseitige Schnittstelleneinheit 110, sowie der Positionsmesseinheit 250 an die messgeräteseitige Schnittstelleneinheit 210 erfolgt in diesem Ausführungsbeispiel über synchron-serielle Schnittstellen.

Das bedeutet für die Steuerungseinheit 100, dass die steuerungsseitigen Ausgangsdaten CU_DO von der Verarbeitungseinheit 150 in den steuerungsseitigen Ausgangsdatenspeicher 170 seriell und synchron zu einem Verarbeitungstakt CU_CLK geschrieben werden. Ebenso erfolgt die Übertragung der steuerungsseitigen Eingangsdaten CU_DI vom steuerungsseitigen Eingangsdatenspeicher 180 zur Verarbeitungseinheit 150 seriell und synchron zum Verarbeitungstakt CU_CLK.

Derartige Schnittstellen werden im Stand der Technik, beispielsweise in der EP0660209B2, zur Datenübertragung über einen zweikanaligen Datenkanal mit separater Übertragung von Takt und Daten eingesetzt.

Mit Vorteil handelt es sich beim steuerungsseitigen Ausgangsdatenspeicher 170, bzw. Eingangsdatenspeicher 180 um serielle Speicherbausteine mit first-in/first-out (FIFO) Architektur. Das bedeutet, dass Datenbits in derselben Reihenfolge aus dem Speicher ausgelesen werden, in der sie in den Speicher hineingeschrieben werden. Dadurch gelingt es, das Schreiben der Daten in den Datenspeicher 170, 180 vom Lesen der Daten aus dem Datenspeicher 170, 180 zu entkoppeln.

Das Eintreffen steuerungsseitiger Ausgangsdaten CU_DO wird dem steuerungsseitigen Taktgenerator 160 über eine Signalleitung 190, beispielsweise vom steuerungsseitigen Ausgangsdatenspeicher 170, signalisiert. Daraufhin startet dieser das steuerungsseitige Sendetaktsignal CU_TXC und überträgt zuerst die Taktsequenz TS und anschließend (symbolisch durch einen Umschalter dargestellt) die steuerungsseitigen Ausgangsdaten CU_DO aus dem FIFO als seriellen Datenstrom zum Positionsmessgerät 200. Das gesendete Datenpaket besteht in diesem Fall also lediglich aus der Taktsequenz TS und den steuerungsseitigen Ausgangsdaten CU_DO. Durch die Verwendung eines FIFOs erfolgt das Senden des Datenpakets noch während der Übertragung der Ausgangsdaten CU_DO in den steuerungsseitigen Ausgangsdatenspeicher 170. Die Frequenz des steuerungsseitigen Sendetaktsignals CU_TXC ist kleiner oder gleich der Frequenz des Verarbeitungstaktes CU_CLK. Somit ist gewährleistet, dass dem steuerungsseitigen Ausgangsdatenspeicher 170 nicht schneller Datenbits entnommen als zugeführt werden.

Im Positionsmessgerät 200 ermittelt die messgeräteseitige Takterkennungseinheit 240 aus der am Beginn des eintreffenden Datenstroms übertragenen Taktsequenz TS die Übertragungsdatenrate und erzeugt das messgeräteseitige Empfängertaktsignal EC_RXC. Nachdem die Taktsequenz TS vollständig empfangen wurde, schaltet die Takterkennungseinheit 240 das messgeräteseitige Empfängertaktsignal EC_RXC (als Messgerätetakt EC_CLK), sowie den Rest des eintreffenden Datenpakets, der ja den messgeräteseitigen Eingangsdaten EC_DI entspricht, zur Positionsmesseinheit 250 durch. Auf einen messgeräteseitigen Eingangsdatenspeicher 280 kann verzichtet werden, wenn die Positionsmesseinheit 250 die messgeräteseitigen Eingangsdaten EC_DI in der verwendeten Datenübertragungsgeschwindigkeit direkt verarbeiten kann. Ist dies nicht der Fall, kann auch hier ein messgeräteseitiger Eingangsdatenspeicher 280 (nicht dargestellt), beispielsweise in Form eines seriellen FIFO, eingesetzt werden.

Werden mit dem eintreffenden Datenpaket Daten, z.B. Positionswerte oder Speicherinhalte, von der Positionsmesseinheit 250 angefordert, schaltet die steuerungsseitige Sendeeinheit 120 den steuerungsseitigen Treiberbaustein 320 über das steuerungsseitige Freigabesignal CU_EN passiv, während die messgeräteseitige Sendeeinheit 220 den messgeräteseitigen Treiberbaustein 330 über das messgeräteseitige Freigabesignal EC_EN aktiv schaltet. Anschließend sendet die messgeräteseitige Sendeeinheit 220 einleitend eine Taktsequenz TS zur Steuerungseinheit 100 und schaltet dann die messgeräteseitigen Ausgangsdaten EC_DO direkt auf den Datenkanal 300 durch. Das messgeräteseitige Sendetaktsignal EC_TXC wird ebenfalls in der messgeräteseitigen Takterkennungseinheit 240 erzeugt und weist in diesem Ausführungsbeispiel ebenfalls die Frequenz des Messgerätetaktes EC_CLK auf.

Für den Fall, dass die angeforderten Daten nicht unmittelbar zur Verfügung stehen, enthält das so generierte Datenpaket zwischen der Taktsequenz TS und den eigentlich angeforderten Daten einen Leerbereich, beispielsweise bestehend aus einer kontinuierlichen Folge von gleichen Bits. Um der Verarbeitungseinheit 150 in der Steuerungseinheit 100 den Beginn des angeforderten Datenworts anzuzeigen, kann ein inverses Bit verwendet werden, das einen Wechsel im logischen Pegel des eingehenden Datenstroms bewirkt.

In der steuerungsseitigen Empfängereinheit 130 ist der eingehende Datenstrom der steuerungsseitigen Takterkennungseinheit 140 zugeführt, die aus der Taktsequenz TS, beispielsweise durch Messen von Flankenabständen, ein steuerungsseitiges Empfängertaktsignal CU_RXC erzeugt, das dem messgeräteseitigen Sendetaktsignal EC_TXC entspricht. Mit Hilfe dieses Taktsignals werden die mit dem Datenstrom übertragenen Bits in den steuerungsseitigen Eingangsdatenspeicher 180 geschrieben. Der Inhalt des steuerungsseitigen Eingangsdatenspeichers 180 kann von der Verarbeitungseinheit 150 kontinuierlich mit dem Verarbeitungstakt CU_CLK ausgelesen werden, da der tatsächliche Beginn der Übertragung der angeforderten Daten eindeutig durch das inverse Bit gekennzeichnet ist. Auch in dieser Datenrichtung muss verhindert werden, dass der Inhalt des steuerungsseitigen Eingangsdatenspeichers 180 schneller ausgelesen als beschrieben wird. Aus diesem Grund muss die Frequenz des messgeräteseitigen Sendetaktsignals EC_TXC, die die Datenübertragungsrate des eingehenden Datenstroms bestimmt, größer oder gleich dem Verarbeitungstakt CU_CLK sein.

Um durch Bauteiltoleranzen und/oder externe Einflüsse (z.B. Temperaturschwankungen) bedingte Abweichungen in der Frequenz der für die Datenübertragung notwendigen Taktsignale CU_TXC, CU_RXC, EC_TXC, EC_RXC, ausgleichen zu können, hat es sich für die Praxis bewährt, für die Datenübertragung von der Steuerungseinheit 100 zum Positionsmessgerät 200 eine niedrigere und für die Datenübertragung vom Positionsmessgerät 200 zur Steuerungseinheit 100 eine höhere Frequenz als die Frequenz des Verarbeitungstakts CU_CLK zu wählen. So beträgt beispielsweise die Frequenz des steuerungsseitigen Sendetaktsignals CU_TXC, bzw. des dazu korrespondierenden messgeräteseitigen Empfängertaktsignals EC_RXC, das 0,75 bis 0,9-fache der Frequenz des Verarbeitungstaktes CU_CLK und die Frequenz des messgeräteseitigen Sendetaktsignals EC_TXC, bzw. des steuerungsseitigen Empfängertaktsignals CU_RXC, das 1,05 bis 1,20-fache der Frequenz des Verarbeitungstaktes CU_CLK. Daraus folgt für das obige Beispiel, dass die messgeräteseitige Takterkennungseinheit 240, abhängig von der Datenrichtung, als Messgerätetakt EC_CLK das messgeräteseitige Empfängertaktsignal EC_RXC, bzw. das messgeräteseitige Sendetaktsignal EC_TXC an die Positionsmesseinheit 250 schaltet.

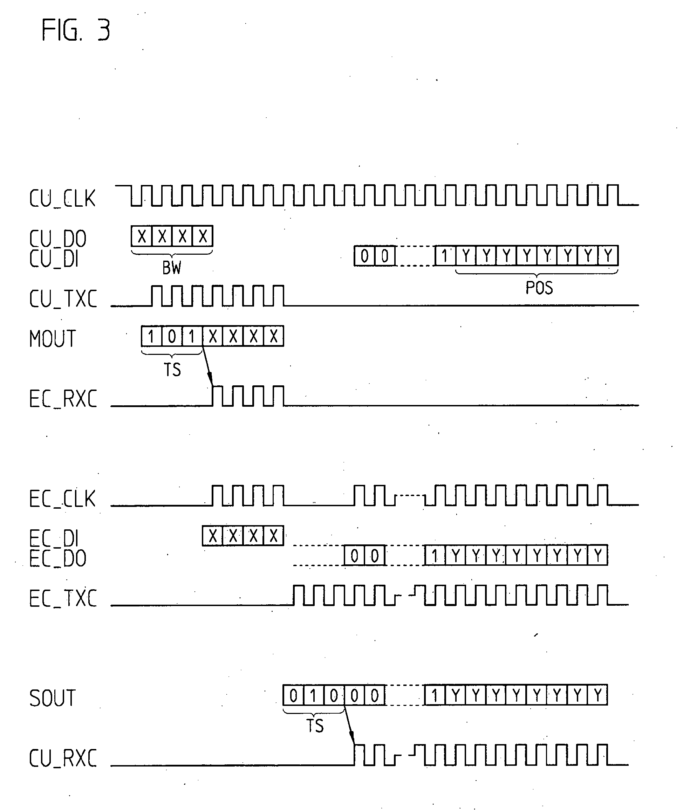

Figur 3 zeigt ein schematisches Signalablaufdiagramm für die in Figur 2 dargestellte erfindungsgemäße Vorrichtung. Gezeigt ist hier ein typischer Kommunikationszyklus zwischen der Steuerungseinheit 100 und dem Positionsmessgerät 200, bei dem zuerst ein Befehlswort BW, beispielsweise ein Anforderungsbefehl für einen Positionswert, von der Steuerungseinheit 100 zum Positionsmessgerät übertragen wird, worauf das Positionsmessgerät das angeforderte Datenwort, beispielsweise den Positionswert POS, zur Steuerungseinheit überträgt.

Der Kommunikationszyklus beginnt mit der synchron-seriellen Übertragung der steuerungsseitigen Ausgangsdaten CU_DO, also in diesem Fall des Befehlswortes BW, in den steuerungsseitigen Ausgangsdatenspeicher 170. Das Befehlswort BW besteht in diesem Beispiel aus vier Befehlsbits X. Die Synchronisation der Übertragung erfolgt mit dem Verarbeitungstakt CU_CLK. Daraufhin generiert der steuerungsseitige Taktgenerator 160 das steuerungsseitige Sendetaktsignal CU_TXC und die steuerungsseitige Sendeeinheit 120 überträgt ein Datenpaket, bestehend aus der Taktsequenz TS, hier die Bitfolge 1-0-1, gefolgt vom Befehlswort BW als seriellen Datenstrom MOUT über den Datenkanal 300 zum Positionsmessgerät 200. In einfachen Systemen, in denen der einzige Befehl eine Positionsdatenanforderung ist, kann auch auf das Befehlwort BW verzichtet werden (Datenwortbreite = 0). In diesem Sonderfall wird bereits die Übertragung der Taktsequenz TS als Positionsdatenanforderung interpretiert.

Im Positionsmessgerät 200 generiert die messgeräteseitige Takterkennungseinheit 240 aus der Taktsequenz TS das messgeräteseitige Empfängertaktsignal EC_RXC. Da kein messgeräteseitiger Ausgangsdatenspeicher 270 vorgesehen ist, wird das empfangene Befehlswort BW in serieller Form direkt an die Positionsmesseinheit 250 weitergeleitet. Zur Synchronisation dient das messgeräteseitige Empfängertaktsignal EC_RXC, das als Messgerätetakt EC_CLK der Positionsmesseinheit 250 zugeführt ist.

Unabhängig davon, wie lange die Positionsmesseinheit 250 für die Bereitstellung der angeforderten Daten benötigt, überträgt die messgeräteseitige Sendeeinheit 220 unmittelbar nach dem Empfang des Befehlswortes BW einen seriellen Datenstrom SOUT, beginnend mit der Taktsequenz TS (hier 0-1-0), gefolgt von einem konstanten Wert, in diesem Beispiel eine logische "0", zur Steuerungseinheit 100. Die Übertragung erfolgt synchron zum messgeräteseitigen Sendetaktsignal EC_TXC, das ebenfalls von der messgeräteseitigen Takterkennungseinheit 240 erzeugt wird. Stehen die angeforderten Daten, beispielsweise der ermittelte Positionswert POS, bereit, wird deren Übertragung mit einem inversen Bit, in diesem Fall einer logischen "1", eingeleitet. Der Positionswert POS besteht hier aus Gründen der Übersichtlichkeit lediglich aus acht Positionsbits Y. Tatsächliche Positionswerte POS bestehen in der Praxis beispielsweise aus 24-40 Bits.

Die steuerungsseitige Takterkennungseinheit 140 erzeugt aus der mit dem eintreffenden Datenstrom übertragenen Taktsequenz TS das steuerungsseitige Empfängertaktsignal CU_RXC. Dieses verwendet die steuerungsseitige Empfängereinheit 130, um die auf die Taktsequenz TS folgenden Bits in den steuerungsseitigen Eingangsdatenspeicher 180 zu schreiben. Schließlich werden die steuerungsseitigen Eingangsdaten CU_DI (bestehend aus dem konstanten Wert "0", gefolgt von dem inversen Bit "1" und dem Positionswert POS) synchron zum Verarbeitungstakt CU_CLK zur Verarbeitungseinheit 150 übertragen. Somit ist der Kommunikationszyklus beendet.

Selbstverständlich können mit einer erfindungsgemäßen Vorrichtung auch komplexere Kommunikationszyklen realisiert werden, bei denen mehr als ein Datenwort in einer Datenrichtung übertragen wird. In diesem Fall ist es besonders vorteilhaft, wenn je Kommunikationszyklus nur vor dem ersten in einer Datenrichtung übertragenen Datenwort eine Taktsequenz TS übertragen wird und das damit verbundene Sendetaktsignal CU_TXC, EC_TXC, bzw. Empfängertaktsignal EC_RXC, CU_RXC dann für weitere Datenworte in der jeweiligen Datenrichtung beibehalten wird.

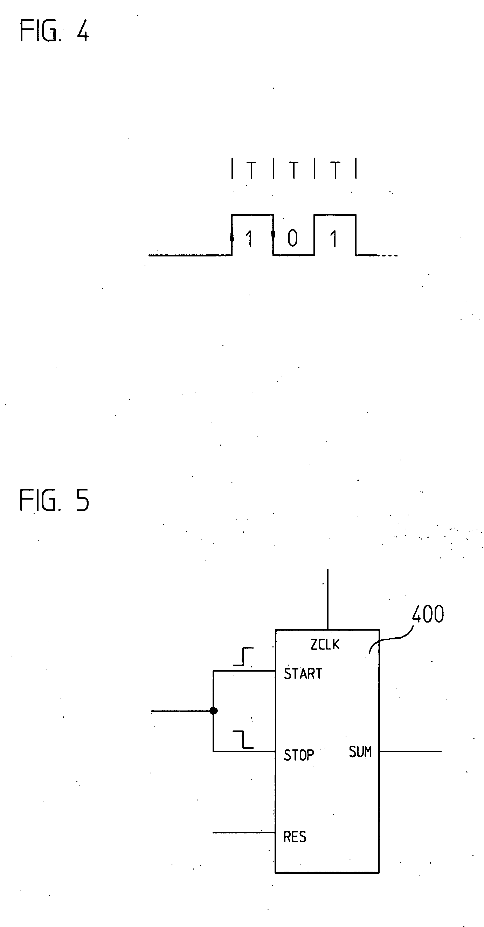

Anhand der Figuren 4 und 5 soll nun die Ermittlung des Empfängertaktsignals EC_RXC, CU_RXC aus einer Taktsequenz TS beschrieben werden. Dabei zeigt Figur 4 ein Signaldiagramm einer Taktsequenz TS, die hier aus der Bitfolge 1-0-1 besteht. In diesem Beispiel entspricht der Signalpegel vor Eintreffen der Taktsequenz TS einer logischen "0". Die Zeitdauer, die ein Bit der Taktsequenz TS und somit auch die darauffolgenden Bits des Datenstroms beansprucht, ist durch zwei aufeinanderfolgende unterschiedliche Signalflänken, z.B. bei einer logischen "1" durch eine steigende Signalflanke gefolgt von einer fallenden Signalflanke, bestimmt und entspricht der Periodendauer T des zu ermittelnden Empfängertaktsignals EC_RXC, CU_RXC.

Für die Messung der Periodendauer T kann, wie Figur 5 zeigt, ein Zähler 400 eingesetzt werden, mit dem die Zeitdauer zwischen zwei Signalflanken messbar ist. Um also die Periodendauer T bei einer logischen "1" zu messen, wird der Zähler 400 mit einer steigenden Signalflanke gestartet und mit einer fallenden Signalflanke wieder angehalten. Zwischen den Signalflanken zählt der Zähler 400 mit der Frequenz eines Zähltaktes ZCLK. Als Zähltakt ZCLK kann beispielsweise der jeweilige Arbeitstakt CLK verwendet werden. Nach erfolgter Messung wird der Zählerwert SUM ausgegeben und der Zähler 400 kann über ein Rücksetzsignal RES für die nächste Messung wieder zurückgesetzt werden. Die Periodendauer T kann nun mit Hilfe des Zählerwerts SUM und des Zähltakts ZCLK berechnet werden.

Die Frequenz des Zähltaktes ZCLK ist dabei so zu wählen, dass der sich aus der Quantisierung ergebende Fehler so klein ist, dass jedes in einem Kommunikationszyklus in der entsprechenden Datenrichtung übertragene Bit sicher abgetastet und erfasst werden kann. In der Praxis hat es sich für die Übertragung von Datenpaketen mit bis zu 140 Bit bewährt, als Zählfrequenz ZCLK zur Ermittlung des Empfängertaktsignals EC_RXC, CU_RXC das 6 bis 8-fache der höchsten zu erwartenden Frequenz zu wählen.

Als Taktsequenz TS können selbstverständlich auch abweichende, insbesondere längere Bitfolgen verwendet werden, aus deren Flankenabständen das zu ermittelnde Empfängertaktsignal EC_RXC, CU_RXC abgeleitet werden kann. Ebenfalls können auch mehrere Zähler 400 zum Einsatz kommen, um verschiedene Flankenabstände der Taktsequenz auszuwerten und so die Ermittlung des Empfängertaktsignals EC_RXC, CU_RXC redundant zu gestalten, bzw. eine Mittelwertbildung zu ermöglichen.

Da es sich bei den Schnittstelleneinheiten 110, 210 um rein digitale Schaltungen handelt, sind sie besonders gut dafür geeignet, in programmierbare Logikbausteine (z.B. FPGA) oder anwenderspezifische integrierte Schaltungen (ASICs) implementiert zu werden. Darüber hinaus besteht die Möglichkeit, für deren Realisierung Mikrocontroller einzusetzen.

## Patentansprüche

1. Vorrichtung zur seriellen Datenübertragung zwischen einer Steuerungseinheit (100) und einem Positionsmessgerät (200), mit
• einer steuerungsseitigen Schnittstelleneinheit (110) und einer messgeräteseitigen Schnittstelleneinheit (210), die zur Übertragung serieller Datenpakete mittels eines bidirektionalen Datenkanals (300) miteinander verbunden sind,
• einer in der steuerungsseitigen Schnittstelleneinheit (110) angeordneten steuerungsseitigen Sendeeinheit (120) zum Senden von seriellen Datenpaketen über den Datenkanal (300) zu einer in der messgeräteseitigen Schnittstelleneinheit (210) angeordneten messgeräteseitigen Empfängereinheit (230),
• einer in der messgeräteseitigen Schnittstelleneinheit (210) angeordneten messgeräteseitigen Sendeeinheit (220) zum Senden von seriellen Datenpaketen über den Datenkanal (300) zu einer in der steuerungsseitigen Schnittstelleneinheit (110) angeordneten steuerungsseitigen Empfängereinheit (130),
wobei die Vorrichtung **dadurch gekennzeichnet ist, daß**
• von der steuerungsseitigen Sendeeinheit (120) gesendete Datenpakete einleitend eine Taktsequenz (TS) enthalten, aus deren zeitlichem Verlauf die Frequenz eines der Übertragung zugrunde liegenden steuerungsseitigen Sendetaktsignals (CU_TXC) ableitbar ist,
• die messgeräteseitige Empfängereinheit (230) eine messgeräteseitige Takterkennungseinheit (240) umfasst, die die Taktsequenz (TS) auswertet indem sie aus der Taktsequenz (TS) die Übertragungsdatenrate ermittelt und zum Einlesen von im Datenpaket enthaltenen steuerungsseitigen Ausgangsdaten (CU_DO) ein messgeräteseitiges Empfängertaktsignal (EC_RXC) generiert, dessen Frequenz weitgehend der des steuerungsseitigen Sendetaktsignals (CU_TXC) entspricht und
• das Zuführen von zu sendenden steuerungsseitigen Ausgangsdaten (CU_DO) von einer in der Steuerungseinheit (100) enthaltenen Verarbeitungseinheit (150) zur steuerungsseitigen Sendeeinheit (120) und die Weiterleitung von empfangenen steuerungsseitigen Eingangsdaten (CU_DI) von der steuerungsseitigen Empfängereinheit (130) zur Verarbeitungseinheit (150) je über eine synchron-serielle Schnittstelle erfolgt.

2. Vorrichtung nach Anspruch 1, wobei die messgeräteseitige Takterkennungseinheit (240) das messgeräteseitige Empfängertaktsignal (EC_RXC) der messgeräteseitigen Sendeeinheit (220) als messgeräteseitlges Sendetaktsignal (EC_TXC) zuführt.

3. Vorrichtung nach Anspruch 1, wobei
• von der messgeräteseitigen Sendeeinheit (220) gesendete Datenpakete ebenfalls einleitend eine Taktsequenz (TS) enthalten, aus deren zeitlichem Verlauf die Frequenz eines der Übertragung zugrunde liegenden messgeräteseitigen Sendetaktsignals (EC_TXC) ableitbar ist und
• die steuerungsseitige Empfängereinheit (130) eine steuerungsseitige Takterkennungseinheit (140) umfasst, die die Taktsequenz (TS) auswertet und zum Einlesen von im Datenpaket enthaltenen messgeräteseitigen Ausgangsdaten (EC_DO) ein steuerungsseitiges Empfängertaktsignal (CU_RXC) generiert, dessen Frequenz weitgehend der des messgeräteseitigen Sendetaktsignals (EC_TXC) entspricht.

4. Vorrichtung nach einem der vorhergehenden Ansprüche, wobei die steuerungsseitige Sendeeinheit (120) einen steuerungsseitigen Ausgangsdatenspeicher (170) umfasst, In dem zu sendende steuerungsseitige Ausgangsdaten (CU_DO) speicherbar sind und/oder die steuerungsseitige Empfängereinheit (130) einen steuerungsseitigen Eingangsdatenspeicher (180) umfasst, in dem empfangene steuerungsseitige Eingangsdaten (CU_DI) speicherbar sind.

5. Vorrichtung nach Anspruch 4, wobei der steuerungsseitige Ausgangsdatenspeicher (170) und/oder der steuerungsseitige Eingangsdatenspeicher (180) ein serieller Speicher mit first-in/first-out Architektur ist.

6. Vorrichtung nach einem der vorhergehenden Ansprüche, wobei die Weiterleitung von empfangenen messgeräteseitigen Eingangsdaten (EC_DI) von der messgeräteseitigen Empfängereinheit (230) zu einer im Positionsmessgerät (200) enthaltenen Positionsmesseinheit (250) und das Zuführen von zu sendenden messgeräteseitigen Ausgangsdaten (EC_DO) von der Positionsmesseinheit (250) zur messgeräteseitigen Sendeeinheit (220) Je über eine synchron-serielle Schnittstelle erfolgt.

7. Vorrichtung nach einem der vorhergehenden Ansprüche, wobei die messgeräteseitige Sendeeinheit (220) einen messgeräteseitigen Ausgangsdatenspeicher (270) umfasst, in dem zu sendende messgeräteseitige Ausgangsdaten (EC_DO) speicherbar sind und/oder die messgeräteseitige Empfängereinheit (230) einen messgeräteseitigen Eingangsdatenspeicher (280) umfasst, In dem empfangene messgeräteseitige Eingangsdaten (EC_DI) speicherbar sind.

8. Vorrichtung nach Anspruch 7, wobei der messgeräteseitige Ausgangsdatenspeicher (270) und/oder der messgeräteseitige Eingangsdatenspeicher (280) ein serieller Speicher mit first-in/first-out Architektur ist.

9. Verfahren zur seriellen Datenübertragung zwischen einem Positionsmessgerät (200) und einer Steuerungseinheit (100) mit einer Vorrichtung, bestehend aus
• einer steuerungsseitigen Schnittstelleneinheit (110) und einer messgeräteseitigen Schnittstelleneinheit (210), die zur Übertragung serieller Datenpakete mittels eines bidirektionalen Datenkanals (300) miteinander verbunden sind,
• einer in der steuerungsseitigen Schnittstelleneinheit (110) angeordneten steuerungsseitigen Sendeeinheit (120) zum Senden von seriellen Datenpaketen über den Datenkanal (300) zu einer in der messgeräteseitigen Schnittstelleneinheit (210) angeordneten messgeräteseitigen Empfängereinheit (230),
• einer in der messgeräteseitigen Schnittstelleneinheit (210) angeordneten messgeräteseitigen Sendeeinheit (220) zum Senden von seriellen Datenpaketen über den Datenkanal (300) zu einer in der steuerungsseitigen Schnittstelleneinheit (110) angeordneten steuerungsseitigen Empfängereinheit (130),
wobei das Verfahren **gekennzeichnet ist durch** die folgenden Schritte:
• Übertragung von steuerungsseitigen Ausgangsdaten (EC_DO) mittels eines Datenpakets von der steuerungsseitigen Sendeeinheit (120) über den Datenkanal (300) zur messgeräteseitigen Empfängereinheit (230) im Zeittakt eines steuerungsseitigen Sendetaktsignals (CU_TXC), wobei das Datenpaket einleitend eine Taktsequenz (TS) enthält, aus deren zeitlichem Verlauf die Frequenz des steuerungsseitigen Sendetaktsignals (CU_TXC) ableitbar ist,
• Ermittlung der Übertragungsdatenrate **durch** Auswertung der Taktsequenz (TS)und Erzeugung eines messgeräteseitigen Empfängertaktsignals (EC_RXC), dessen Frequenz weitgehend der des steuerungsseitigen Sendetaktsignals (CU_TXC) entspricht, in einer messgeräteseitigen Takterkennungseinheit (240), die in der messgeräteseitigen Empfängereinheit (230) angeordnet ist,
• Einlesen von im Datenpaket enthaltenen steuerungsseitigen Ausgangsdaten (CU_DO) als messgeräteseitige Eingangsdaten (EC_DI) im Zeittakt des messgeräteseitigen Empfängertaktsignals (EC_RXC),
wobei
• zu sendende steuerungsseitige Ausgangsdaten (CU_DO) von einer in der Steuerungseinheit (100) enthaltenen Verarbeitungseinheit (150) über eine synchron-serielle Schnittstelle der steuerungsseitigen Sendeeinheit (120) zugeführt werden und
• empfangene steuerungsseitige Eingangsdaten (CU_DI) von der steuerungsseitigen Empfängereinheit (130) über eine synchron-serielle Schnittstelle zur Verarbeitungseinheit (150) weitergeleitet werden.

10. Verfahren nach Anspruch 9, wobei das Datenpaket, bestehend aus der Taktsequenz (TS) und den steuerungsseitigen Ausgangsdaten (CU_DO), die der steuerungsseitigen Sendeeinheit (120) von einer in der Steuerungseinheit (100) enthaltenen Verarbeitungseinheit (150) zugeführt werden, in der steuerungsseitigen Sendeeinheit (120) gebildet wird.

11. Verfahren nach einem der Ansprüche 9 bis 10, wobei die messgeräteseitigen Eingangsdaten (EC_DI) an eine im Positionsmessgerät (200) enthaltene Positionsmesseinheit (250) weitergeleitet werden.

12. Verfahren nach Anspruch 11, wobei die Positionsmesseinheit (250) Daten, die von einem in den messgerätsseitigen Eingangsdaten (EC_DI) enthaltenen Befehl angefordert werden, als messgeräteseitige Ausgangsdaten (EC_DO) der messgeräteseitigen Sendeeinheit (220) zuführt.

13. Verfahren nach Anspruch 12, mit folgenden weiteren Schritten:
• Übertragung der messgeräteseitigen Ausgangsdaten (EC_DO) mittels eines Datenpakets von der messgeräteseitigen Sendeeinheit (220) über den Datenkanal (300) zur steuerungsseitigen Empfängereinheit (130) im Zeittakt eines messgeräteseitigen Sendetaktsignals (EC_TXC), wobei das Datenpaket einleitend eine Taktsequenz (TS) enthält, aus deren zeitlichem Verlauf die Frequenz des messgeräteseitigen Sendetaktsignals (EC_TXC) ableitbar ist,
• Auswertung der Taktsequenz (TS) und Erzeugung eines steuerungsseitigen Empfängertaktsignals (CU_RXC), dessen Frequenz weitgehend der des messgeräteseitigen Sendetaktsignals (EC_TXC) entspricht, in einer steuerungsseitigen Takterkennungseinheit (140), die in der steuerungsseitigen Empfängereinheit (130) angeordnet ist,
• Einlesen der im Datenpaket enthaltenen messgeräteseitigen Ausgangsdaten (EC_DO) als steuerungsseitige Eingangsdaten (CU_DI) im Zeittakt des steuerungsseitigen Empfängertaktsignals (CU_RXC).

14. Verfahren nach Anspruch 13, wobei das Datenpaket in der messgeräteseitigen Sendeeinheit (220) aus der Taktsequenz (TS) und den messgeräteseitigen Ausgangsdaten (EC_DO) gebildet wird.

15. Verfahren nach einem der Ansprüche 13 bis 14, wobei die steuerungsseitigen Eingangsdaten (CU_DI) an die Verarbeitungseinheit (150) weitergeleitet werden.

16. Verfahren nach einem der Ansprüche 9 bis 15, wobei die steuerungsseitigen Ausgangsdaten (CU_DO) in einem steuerungsseitigen Ausgangsdatenspeicher (170), der in der steuerungsseitigen Sendeeinheit (120) angeordnet ist, zwischengespeichert werden und/oder die steuerungsseitigen Eingangsdaten (CU_DI) in einem steuerungsseitigen Eingangsdatenspeicher (180), der in der steuerungsseitigen Empfängereinheit (130) angeordnet ist, zwischengespeichert werden.

17. Verfahren nach einem der Ansprüche 9 bis 16, wobei die messgeräteseitigen Eingangsdaten (EC_DI) in einem messgeräteseitigen Eingangsdatenspeicher (280), der in der messgeräteseitigen Empfängereinheit (230) angeordnet ist, zwischengespeichert werden und/oder die messgeräteseitigen Ausgangsdaten (EC_DO) in einem messgeräteseitigen Ausgangsdatenspeicher (270), der in der messgeräteseitigen Sendeeinheit (220) angeordnet ist, zwischengespeichert werden.

18. Verfahren nach einem der Ansprüche 9 bis 17, wobei die Auswertung der Taktsequenz (TS) durch Messung von Flankenabständen erfolgt.

## Claims

1. Apparatus for serial data transmission between a control unit (100) and a position measuring device (200), having
• a control-side interface unit (110) and a measuring-device-side interface unit (210) that are connected to one another for the purpose of transmitting serial data packets by means of a bidirectional data channel (300),
• a control-side transmission unit (120), arranged in the control-side interface unit (110), for sending serial data packets via the data channel (300) to a measuring-device-side receiver unit (230) arranged in the measuring-device-side interface unit (210),
• a measuring-device-side transmission unit (220), arranged in the measuring-device-side interface unit (210), for sending serial data packets via the data channel (300) to a control-side receiver unit (130) arranged in the control-side interface unit (110),
wherein the apparatus is **characterized in that**
• data packets sent by the control-side transmission unit (120) contain an introductory clock sequence (TS) from whose time profile it is possible to derive the frequency of a control-side transmission clock signal (CU_TXC) on which the transmission is based,
• the measuring-device-side receiver unit (230) comprises a measuring-device-side clock recognition unit (240) that evaluates the clock sequence (TS) by ascertaining the transmission data rate from the clock sequence (TS) and, for the purpose of reading in control-side output data (CU_DO) that the data packet contains, generating a measuring-device-side receiver clock signal (EC_RXC) whose frequency largely corresponds to that of the control-side transmission clock signal (CU_TXC), and
• the supply of control-side output data (CU_DO), requiring sending, from a processing unit (150) that the control unit (100) contains to the control-side transmission unit (120) and the forwarding of received control-side input data (CU_DI) from the control-side receiver unit (130) to the processing unit (150) each take place via a synchronous serial interface.

2. Apparatus according to Claim 1, wherein the measuring-device-side clock recognition unit (240) supplies the measuring-device-side receiver clock signal (EC_RXC) to the measuring-device-side transmission unit (220) as a measuring-device-side transmission clock signal (EC_TXC).

3. Apparatus according to Claim 1, wherein
• data packets sent by the measuring-device-side transmission unit (220) likewise contain an introductory clock sequence (TS) from whose time profile it is possible to derive the frequency of a measuring-device-side transmission clock signal (EC_TXC) on which the transmission is based, and
• the control-side receiver unit (130) comprises a control-side clock recognition unit (140) that evaluates the clock sequence (TS) and, for the purpose of reading in measuring-device-side output data (EC_DO) that the data packet contains, generates a control-side receiver clock signal (CU_RXC) whose frequency largely corresponds to that of the measuring-device-side transmission clock signal (EC_TXC).

4. Apparatus according to one of the preceding claims, wherein the control-side transmission unit (120) comprises a control-side output data memory (170) that can be used to store control-side output data (CU_DO) requiring sending and/or the control-side receiver unit (130) comprises a control-side input data memory (180) that can be used to store received control-side input data (CU_DI).

5. Apparatus according to Claim 4, wherein the control-side output data memory (170) and/or the control-side input data memory (180) is/are a serial memory with a first-in/first-out architecture.

6. Apparatus according to one of the preceding claims, wherein the forwarding of received measuring-device-side input data (EC_DI) from the measuring-device side receiver unit (230) to a position measuring unit (250) that the position measuring device (200) contains and the supply of measuring-device-side output data (EC_DO), requiring sending, from the position measuring unit (250) to the measuring-device-side transmission unit (220) each take place via a synchronous serial interface.

7. Apparatus according to one of the preceding claims, wherein the measuring-device-side transmission unit (220) comprises a measuring-device-side output data memory (270) that can be used to store measuring-device-side output data (EC_DO) requiring sending and/or the measuring-device-side receiver unit (230) comprises a measuring-device-side input data memory (280) that can be used to store received measuring-device-side input data (EC_DI).

8. Apparatus according to Claim 7, wherein the measuring-device-side output data memory (270) and/or the measuring-device-side input data memory (280) is/are a serial memory with a first-in/first-out architecture.

9. Method for serial data transmission between a position measuring device (200) and a control unit (100) having an apparatus, consisting of
• a control-side interface unit (110) and a measuring-device-side interface unit (210) that are connected to one another for the purpose of transmitting serial data packets by means of a bidirectional data channel (300),
• a control-side transmission unit (120), arranged in the control-side interface unit (110), for sending serial data packets via the data channel (300) to a measuring-device-side receiver unit (230) arranged in the measuring-device-side interface unit (210),
• a measuring-device-side transmission unit (220), arranged in the measuring-device-side interface unit (210), for sending serial data packets via the data channel (300) to a control-side receiver unit (130) arranged in the control-side interface unit (110),
wherein the method is **characterized by** the following steps:
• transmission of control-side output data (EC_DO) by means of a data packet from the control-side transmission unit (120) via the data channel (300) to the measuring-device-side receiver unit (230) using the timing of a control-side transmission clock signal (CU_TXC), wherein the data packet contains an introductory clock sequence (TS) from whose time profile it is possible to derive the frequency of the control-side transmission clock signal (CU_TXC),
• ascertainment of the transmission data rate by virtue of evaluation of the clock sequence (TS) and generation of a measuring-device-side receiver clock signal (EC_RXC), whose frequency largely corresponds to that of the control-side transmission clock signal (CU_TXC), in a measuring-device-side clock recognition unit (240) that is arranged in the measuring-device-side receiver unit (230),
• reading-in of control-side output data (CU_DO) that the data packet contains as measuring-device-side input data (EC_DI) using the timing of the measuring-device-side receiver clock signal (EC_RXC),
wherein
• control-side output data (CU_DO) requiring sending are supplied from a processing unit (150) that the control unit (100) contains to the control-side transmission unit (120) via a synchronous serial interface, and
• received control-side input data (CU_DI) are forwarded from the control-side receiver unit (130) to the processing unit (150) via a synchronous serial interface.

10. Method according to Claim 9, wherein the data packet, consisting of the clock sequence (TS) and the control-side output data (CU_DO) that are supplied to the control-side transmission unit (120) by a processing unit (150) that the control unit (100) contains, is formed in the control-side transmission unit (120).

11. Method according to either of Claims 9 and 10, wherein the measuring-device-side input data (EC_DI) are forwarded to a position measuring unit (250) that the position measuring device (200) contains.

12. Method according to Claim 11, wherein the position measuring unit (250) supplies data that are requested by a command that the measuring-device-side input data (EC_DI) contain to the measuring-device-side transmission unit (220) as measuring-device-side output data (EC_DO).

13. Method according to Claim 12, having the following further steps:
• transmission of the measuring-device-side output data (EC_DO) by means of a data packet from the measuring-device-side transmission unit (220) via the data channel (300) to the control-side receiver unit (130) using the timing of a measuring-device-side transmission clock signal (EC_TXC), wherein the data packet contains an introductory clock sequence (TS) from whose time profile it is possible to derive the frequency of the measuring-device-side transmission clock signal (EC_TXC),
• evaluation of the clock sequence (TS) and generation of a control-side receiver clock signal (CU_RXC), whose frequency largely corresponds to that of the measuring-device-side transmission clock signal (EC_TXC), in a control-side clock recognition unit (140) that is arranged in the control-side receiver unit (130),
• reading-in of the measuring-device-side output data (EC_DO) that the data packet contains as control-side input data (CU_DI) using the timing of the control-side receiver clock signal (CU_RXC).

14. Method according to Claim 13, wherein the data packet is formed in the measuring-device-side transmission unit (220) from the clock sequence (TS) and the measuring-device-side output data (EC_DO).

15. Method according to either of Claims 13 and 14, wherein the control-side input data (CU_DI) are forwarded to the processing unit (150).

16. Method according to one of Claims 9 to 15, wherein the control-side output data (CU_DO) are buffer-stored in a control-side output data memory (170) that is arranged in the control-side transmission unit (120) and/or the control-side input data (CU_DI) are buffer-stored in a control-side input data memory (180) that is arranged in the control-side receiver unit (130).

17. Method according to one of Claims 9 to 16, wherein the measuring-device-side input data (EC_DI) are buffer-stored in a measuring-device-side input data memory (280) that is arranged in the measuring-device-side receiver unit (230) and/or the measuring-device-side output data (EC_DO) are buffer-stored in a measuring-device-side output data memory (270) that is arranged in the measuring-device-side transmission unit (220).

18. Method according to one of Claims 9 to 17, wherein the clock sequence (TS) is evaluated by measuring edge intervals.

## Revendications

1. Dispositif destiné à transmettre en série des données entre une unité de commande (100) et un appareil de mesure de position (200), comportant
- une unité d'interface côté commande (110) et une unité d'interface côté appareil de mesure (210), qui sont connectées l'une à l'autre au moyen d'un canal de données bidirectionnel (300) pour transmettre des paquets de données en série,
- une unité d'émission (120) côté commande disposée dans l'unité d'interface côté commande (110) pour envoyer des paquets de données en série par l'intermédiaire du canal de données (300) à une unité de réception (230) côté appareil de mesure disposée dans l'unité d'interface côté appareil de mesure (210),
- une unité d'émission côté appareil de mesure (220) disposée dans l'unité d'interface côté appareil de mesure (210) pour émettre des paquets de données en série par l'intermédiaire du canal de données (300) vers une unité de réception côté appareil de mesure (130) disposée dans l'unité d'interface côté appareil de mesure (110),
dans lequel le dispositif est **caractérisé en ce que**
- des paquets de données émis par l'unité d'émission côté commande (120) contiennent en introduction une séquence d'horloge (TS) dont l'évolution temporelle permet de déduire la fréquence d'un signal d'horloge d'émission côté commande (CU_TXC) sous-jacent à la transmission,
- l'unité de réception côté appareil de mesure (230) comprend une unité d'identification d'horloge côté appareil de mesure (240) qui évalue la séquence d'horloge (TS) en déterminant le débit de données de transmission à partir de la séquence d'horloge (TS) et en générant un signal d'horloge de réception (EC_RXC) côté appareil de mesure pour lire en entrée des données de sortie côté commande (CU_DO) contenues dans un paquet de données, dont la fréquence correspond essentiellement à celle du signal d'horloge d'émission côté commande (CU_TXC) et
- l'acheminement de données de sortie côté commande (CU_DO) à émettre d'une unité de traitement (150) contenue dans l'unité de commande (100) à l'unité d'émission côté commande (120) et le réacheminement de données d'entrée côté commande (CU_DI) reçues de l'unité de réception côté commande (130) vers l'unité de traitement (150) s'effectuent respectivement par l'intermédiaire d'une interface série synchrone.

2. Dispositif selon la revendication 1, dans lequel l'unité d'identification d'horloge côté appareil de mesure (240) achemine le signale d'horloge de réception côté appareil de mesure (EC_RXC) à l'unité d'émission côté appareil de mesure (220) en tant que signal d'horloge d'émission côté appareil de mesure.

3. Dispositif selon la revendication 1, dans lequel
- des paquets de données émis par l'unité d'émission côté appareil de mesure contiennent également en introduction une séquence d'horloge (TS) dont l'évolution temporelle permet de déduire la fréquence d'un signal d'horloge d'émission côté appareil de mesure (EC_TXC) sous-jacent à la transmission et
- l'unité de réception côté commande (130) comprend une unité d'identification d'horloge côté commande (140) qui évalue la séquence d'horloge (TS) et génère un signal d'horloge de réception côté commande (CU_RXC) pour la lecture en entrée de données de sortie côté appareil de mesure (EC_DO) contenues dans le paquet de données, dont la fréquence correspond essentiellement à celle du signal d'horloge d'émission côté appareil de mesure (EC_TXC).

4. Dispositif selon l'une quelconque des revendications précédentes, dans lequel l'unité d'émission côté commande (120) comprend une mémoire de données de sortie côté commande (170) dans laquelle peuvent être stockées des données de sortie côté commande (CU_DO) à émettre et/ou l'unité de réception côté commande (130) comprend une mémoire de données d'entrée côté commande (180) dans laquelle peuvent être stockées des données d'entrée côté commande (CU_DI).

5. Dispositif selon la revendication 4, dans lequel la mémoire de données de sortie côté commande (170) et/ou la mémoire de données d'entrée côté commande (180) est une mémoire série ayant une architecture du type premier entré/premier sorti.

6. Dispositif selon l'une quelconque des revendications précédentes, dans lequel le réacheminement de données d'entrée côté appareil de mesure (EC_D1) reçues s'effectue de l'unité de réception côté appareil de mesure (230) vers une unité de mesure de position (250) contenue dans l'appareil de mesure de position (200) et l'acheminement de données de sortie côté appareil de mesure (EC_DO) à émettre vers l'unité d'émission côté appareil de mesure (220) s'effectue par l'intermédiaire d'une interface série synchrone.

7. Dispositif selon l'une quelconque des revendications précédentes, dans lequel l'unité d'émission côté appareil de mesure (220) comprend une mémoire de données de sortie côté appareil de mesure (270) dans laquelle peuvent être stockées des données de sortie côté appareil de mesure (EC_DO) à émettre et/ou l'unité de réception côté appareil de mesure (230) comprend une mémoire de données d'entrée côté appareil de mesure (280) dans laquelle peuvent être stockées des données d'entrée côté appareil de mesure (EC_DI) reçues.

8. Dispositif selon la revendication 7, dans lequel la mémoire de données de sortie côté appareil de mesure (270) et/ou la mémoire de données d'entrée côté appareil de mesure (280) est une mémoire série ayant une architecture du type premier entré/premier sorti.

9. Procédé destiné à transmettre en série des données entre un appareil de mesure de position (200) et une unité de commande (100) comportant un dispositif comprenant
- une unité d'interface côté commande (110) et une unité d'interface côté appareil de mesure (210) qui sont connectées l'une à l'autre pour la transmission de paquets de données en série au moyen d'un canal de données bidirectionnel (300),
- une unité d'émission côté commande (120) disposée dans l'unité d'interface côté commande (110) pour émettre des paquets de données en série par l'intermédiaire du canal de données (300) vers une unité de réception côté appareil de mesure (230) disposée dans l'unité d'interface côté appareil de mesure,
- une unité d'émission côté appareil de mesure (220) disposée dans l'unité d'interface côté appareil de mesure (210) pour émettre des paquets de données en série par l'intermédiaire du canal de données (300) vers une unité de réception côté commande (130) disposée dans l'unité d'interface côté commande (110),
dans lequel le procédé est **caractérisé par** les étapes consistant à :
- transmettre des données de sortie côté commande (EC_DO) au moyen d'un paquet de données de l'unité d'émission côté commande (120) par l'intermédiaire du canal de données (300) à l'unité de réception côté appareil de mesure (230) selon le cadencement d'un signal d'horloge d'émission côté commande (CU_TXC), dans lequel le paquet de données contient en introduction une séquence d'horloge (TS) dont l'évolution temporelle permet de déduire la fréquence du signal d'horloge d'émission côté commande (CU_TXC),
- déterminer le débit de données de transmission en évaluant la séquence d'horloge (TS) et en générant un signal d'horloge de réception côté appareil de mesure (EC_RXC) dont la fréquence correspond essentiellement à celle du signal d'horloge d'émission côté commande (CU_TXC), dans une unité d'identification d'horloge côté appareil de mesure (240) qui est disposé dans l'unité de réception côté appareil de mesure (230)
- lire en entrée des données de sortie côté commande (CU_DO) contenues dans le paquet de données en tant que données d'entrée côté appareil de mesure (EC_DI) selon le cadencement du signal d'horloge de réception côté appareil de mesure (EC_RXC),
dans lequel
- des données de sortie côté commande (CU_DO) à émettre sont acheminées par une unité de traitement (150) contenue dans l'unité de commande (100) par l'intermédiaire d'une interface série synchrone de l'unité d'émission côté commende (120) et
- des données d'entrée côté commande (CU_DI) reçues sont réacheminées par l'unité de réception côté commande (130) par l'intermédiaire d'une interface série synchrone vers l'unité de traitement (150).

10. Procédé selon la revendication 9, dans lequel le paquet de données, constitué de la séquence d'horloge (TS) et des données de sortie côté commande (CU_DO), qui sont acheminées vers l'unité d'émission côté commande (120) par une unité de traitement (150) contenue dans l'unité de commande (100), est construit dans l'unité d'émission côté commande (120).

11. Procédé selon l'une quelconque des revendications 9 à 10, dans lequel les données d'entrée côté appareil de mesure (EC_DI) sont réacheminées vers une unité de mesure de position (250) contenue dans l'appareil de mesure de position (200).

12. Procédé selon la revendication 11, dans lequel l'unité de mesure de position (250) achemine vers l'unité d'émission côté appareil de mesure (220) des données qui sont demandées par une instruction contenue dans les données d'entrée côté appareil de mesure (EC_DI), en tant que données de sortie côté appareil de mesure (EC_DO).

13. Procédé selon la revendication 12, comprenant les étapes supplémentaires consistant à :
- transmettre les données de sortie côté appareil de mesure (EC_DO) au moyen d'un paquet de données de l'unité d'émission côté appareil de mesure (220) à l'unité de réception côté commande (130) par l'intermédiaire du canal de données (300) selon le cadencement d'un signal d'horloge d'émission côté appareil de mesure (EC_TXC), dans lequel le paquet de données contient en introduction une séquence d'horloge (TS) dont l'évolution temporelle permet de déduire la fréquence du signal d'horloge d'émission côté appareil de mesure (EC_TXC),
- évaluer la séquence d'horloge (TS) et générer un signal d'horloge de réception côté commande (CU_RXC) dont la fréquence correspond essentiellement à celle du signal d'horloge d'émission côté appareil de mesure (EC_TXC), dans une unité d'identification d'horloge côté commande (140) qui est disposée dans l'unité de réception côté commande (130),
- lire en entrée les données de sortie côté appareil de mesure (EC_DO) contenues dans le paquet de données en tant que données d'entrée côté commande (CU_DI) selon le cadencement du signal d'horloge de réception côté commande (CU_RXC).

14. Procédé selon la revendication 13, dans lequel le paquet de données est construit dans l'unité d'émission côté appareil de mesure (220) à partir de la séquence d'horloge (TS) et des données de sortie côté appareil de mesure (EC_DO).

15. Procédé selon l'une quelconque des revendications 13 à 14, dans lequel les données d'entrée côté commande (CU_DI) sont réacheminées vers l'unité de traitement (150).

16. Procédé selon l'une quelconque des revendications 9 à 15, dans lequel les données de sortie côté commande (CU_DO) sont mises en tampon dans une mémoire de données de sortie côté commande (170) qui est disposée dans l'unité d'émission côté commande (120) et/ou les données d'entrée côté commande (CU_DI) sont mises en tampon dans une mémoire de données d'entrée côté commande (180) qui est disposée dans l'unité de réception côté commande (130).

17. Procédé selon l'une quelconque des revendications 9 à 16, dans lequel les données d'entrée côté appareil de mesure (C_DI) sont mises en tampon dans une mémoire de données d'entrée côté appareil de mesure (280) qui est disposée dans l'unité de réception côté appareil de mesure (230) et/ou les données de sortie côté appareil de mesure (EC_DO) sont mises en tampon dans une mémoire de données de sortie côté appareil de mesure (270) qui est disposée dans l'unité d'émission côté appareil de mesure (220).

18. Procédé selon l'une quelconque des revendications 9 à 17, dans lequel l'évaluation de la séquence d'horloge (TS) s'effectue par mesure des distances entre fronts.
